# EUROPÄISCHE PATENTSCHRIFT

(11) **EP 1 739 777 B1**
(45) Veröffentlichungstag und Bekanntmachung des Hinweises auf die Patenterteilung: **22.01.2014**
(21) Anmeldenummer: 06011462.6
(22) Anmeldetag: 02.06.2006
(51) Int. Cl.: H01M 8/04, H01M 8/06, C01B 3/38

(54) **Brennstoffzellensystem für ein Fahrzeug**
Fuel cell system for vehicles
Système de pile à combustible pour véhicules

(30) Priorität: 28.06.2005 DE 102005030474; 04.05.2006 EP 06009180
(43) Veröffentlichungstag der Anmeldung: 03.01.2007
(73) Patentinhaber: Eberspächer Climate Control Systems GmbH & Co. KG, 73730 Esslingen (DE)
(72) Erfinder: Reiners, Karsten, Dipl.-Ing., 70439 Stuttgart (DE); Eberspach, Günter, Dipl.-ing., 72469 Wolfschlugen (DE); Kaupert, Andreas, Dipl.-Ing., 73730 Esslingen (DE)
(74) Vertreter: Sawodny, Michael-Wolfgang

(56) Entgegenhaltungen:
- EP-A- 0 977 294
- WO-A-03/065488
- WO-A-03/098728
- DE-A1- 10 013 597
- DE-A1- 10 142 578
- DE-A1- 10 330 123
- DE-A1- 19 910 387
- DE-B4- 10 244 883

## Beschreibung

Die vorliegende Erfindung betrifft ein Brennstoffzellensystem für Fahrzeuge.

### Stand der Technik

Bei modernen Kraftfahrzeugen besteht aufgrund des ständig steigenden Stromverbrauches in den Fahrzeugen selber und wegen der immer aufwendigeren Bordelektronik das Erfordernis die motorbetriebenen Stromgeneratoren durch motorunabhängige Stromeinheiten zu ersetzen. Derartige motorunabhängige Stromeinheiten werden auch Auxiliary Power Units (APU) bezeichnet. Bevorzugt sind diese motorunabhängigen Stromgeneratoren, solche, die mit Hilfe von Brennstoffzelleneinheiten betrieben werden können. Der Vorteil dieser Systeme liegt darin, dass Brennstoffzellen mit konventionellen Kraftstoffen betrieben werden können. Um Strom zu erzeugen, wird zunächst der konventionelle Kraftstoff, wie z.B. Benzin oder Dieselkraftstoff in einem sog. Reformer zu wasserstoffhaltigem Gas umgewandelt, welches zusammen mit Luft in einer Brennstoffzelle dann in Strom umgewandelt wird.

Aus der DE 100 13 597 A1 ist ein System bekannt, das einen Verbrennungsmotor bzw. einen Brenner einerseits und eine Brennstoffzelle andererseits umfasst. Der in einem Reformer aus flüssigem Brennstoff bereitgestellte Wasserstoff wird in einer Trenneinrichtung von dem Restbrennstoff getrennt und dann zur Erzeugung von Elektrizität zu einer Brennstoffzelle geleitet. Der von dem Wasserstoff getrennte Restbrennstoff wird ggf. zusammen mit einem zusätzlichen Brennstoffstrom von der Brennstoffquelle zu einem Brenner geleitet. Die dort entstehende Wärme kann beispielsweise genutzt werden, um kinetische Energie und Edukte für den Brennstoffzellen- und Reformerprozess zu erzeugen sowie um Abgasanlagen und Innenräume eines Fahrzeugs vorzuwärmen.

Aus der DE 10142578 A1 ist ein Kaltstartverfahren für eine Reformeranordnung bekannt geworden. Bei dem aus der DE 10142578 A1 bekannten Verfahren ist aber kein Reformer-Reformatbrenner nach dem Reformer und vor der Brennstoffzelle angeordnet.

Die DE 10002006 A1 offenbart eine Reformeranordnung mit Katalysatoreinheit für ein Brennstoffzellensystem, bei dem die Katalysatoreinheit zur Erreichung der notwendigen Betriebstemperatur elektrisch geheizt wird.

Die DE 199 13 794 A1 zeigt ein System, bei dem zwischen einer Brennstoffzelle, einer Brennkraftmaschine und einem Kühler ein Kühlmedium zirkuliert, um sowohl im Bereich der Brennstoffzelle erzeugte Wärme als auch im Bereich der Brennkraftmaschine erzeugte Wärme abgeben zu können. Der die Brennkraftmaschine verlassende Abgasstrom strömt zur Übertragung der dort transportierten Wärme von einem Wärmetauscherbereich in einen Reformer, bevor er über eine Abgasreinigungsstufe nach außen hin abgegeben wird.

Die DE 44 46 841 A1 offenbart ein Brennstoffzellenmodul, bei dem ein wasserstoffhaltiges Brenngas, nachdem es eine Brennstoffzelle durchströmt hat und dabei durch Umsetzung von Wasserstoff mit Sauerstoff Elektrizität erzeugt worden ist, durch einen Brenner geleitet wird, um in diesem Anodenabgas enthaltenen Restwasserstoff in einer katalytischen Reaktion zu verbrennen. Die dabei entstehende Wärme, transportiert in den Verbrennungsabgasen, wird im Kathodenbereich auf die Brennstoffzelle übertragen.

Aus der DE 10 2004 002337 A1 ist ein Brennstoffzellensystem bekannt geworden, bei dem eine Restreformeinrichtung sowohl mit einer Nachverbrennungseinrichtung, als auch über einen Rezirkuliergaswärmetauscher mit dem Reformer verbunden ist.

Aus der DE 102 44 803 B4 ist ein Heizsystem für ein Fahrzeug bekannt geworden, bei dem eine Reformeranordnung, die beispielsweise für den Betrieb einer Brennstoffzelle Wasserstoff bereitstellt mit einem Heizsystem gekoppelt ist. Die Koppelung zum Heizsystem geschieht dadurch, dass der von der Reformeranordnung bereitgestellte Wasserstoff verbrannt wird und die dadurch entstehende Verbrennungswärme zur Erwärmung verschiedener Fahrzeugsystembereiche genutzt wird. Eine derartige Anordnung ermöglicht es, die Standheizung oder die Zuheizungsfunktion in ein Reformersystem zu integrieren.

Nachteil an der aus der DE 102 44 883 B4 bekannten Anordnung ist, dass dem Reformer eine Brenneranordnung nachgeschaltet ist, wobei die in der Brenneranordnung zur Verfügung gestellte Wärme mit Hilfe einer Wärmetauscheranordnung anderen Komponenten des Fahrzeugs zur Verfügung gestellt wird. Die vom Wärmetauscher abgegebene Wärme wird aber im Wesentlichen nur im Standheizungs- bzw. Winterbetrieb benötigt. Wird die Wärme nicht benötigt so stellt der nachgeschaltete Wärmetauscher eine Wärmesenke des Systems dar. Aus den oben genannten Gründen ist die Nachschaltung eines Wärmetauschers direkt nach dem Reformer sehr aufwendig und daher nachteilig.

Eine Rezirkulation von Brennstoffzellenabgas ist aus der DE 10244883 nicht bekannt geworden.

Aus der EP 0 977 294 A1 ist eine Anlage mit einer Hochtemperatur-Brennstoffzelle bekannt geworden, die einen Reformer umfasst, der derart ausgebildet ist, dass die für die endothermen Reformierungsprozesse benötigte Wärme zumindest teilweise über Strahlung von den Brennstoffzellen auf den Reformer übertragbar ist. Die EP 0 977 294 A1 stellt den nächstliegenden Stand der Technik dar.

### Aufgabenstellung

Es ist Aufgabe der vorliegenden Erfindung die Nachteile des Standes der Technik zu überwinden.

Die Erfindung soll ein Brennstoffzellensystem zur Verfügung stellen, das mit Hilfe des Reformers gestartet werden kann, wobei irreversible Ablagerungen von Kondensationsrückständen, die aufgrund der Zusammensetzung des Reformats in der Startphase, d.h. bei niedrigen Temperaturen gebildet werden, vermieden werden. Die Ablagerung von Kondensationsrückständen und auch Ruß in der Brennstoffzelle in der Startphase des Reformers ist darauf zurück zu führen, dass der Reformer in der Startphase einen erheblichen Anteil von gasförmigem Wasser und nicht vollständigen umgesetzten Kohlenwasserstoffen aufweist, die in den nachfolgenden Komponenten des Reformers, wie beispielsweise der Gasreinigungsstufe und/oder der Brennstoffzelle auskondensieren.

Es soll insbesondere eine Lösung angegeben werden, die sich durch eine möglichst einfache und kostengünstige Herstellung gegenüber einer Anordnung wie in der DE 102 44 883 gezeigt, auszeichnet und insbesondere den oben genannten Nachteil beim Startvorgang vermeidet.

### Darstellung der Erfindung

Erfindungsgemäß wird die Aufgabe der Erfindung durch ein Brennstoffzellensystem gemäß Anspruch 1 mit Hochtemperatur-Brennstoffzelle gelöst.

Vorteilhafte Ausgestaltungen der Erfindung sind Gegenstand der Unteransprüche.

Das erfindungsgemäße Brennstoffzellensystem gemäß der Erfindung zeichnet sich dadurch aus, dass die Reformer-Reformatbrenneranordnung direkt mit der Brennstoffzelle verbunden ist, wobei vor Erreichen einer Anti-Kondensationstemperatur die in der Reformer-Reformatbrenneranordnung erzeugten Verbrennungsgase oder nach Erreichen der Anti-Kondensationstemperatur Reformat direkt in die Brennstoffzelle geleitet werden.

Die Anordnung mit einer Reformer-Reformatbrenneranordnung, die dem Reformer nachgeschaltet ist, ermöglicht die nachstehend beschriebene Verfahrensführung zum Starten des Brennstoffzellensystems

Zum Start des Brennstoffzellensystems werden in einem ersten Schritt die Bauteile der Gemischbildung, d.h. der Reformer und die dem Reformer zugeführte Luft erwärmt, bis die Aktivierungstemperatur des Katalysators, d.h. die sogenannte Katalysatoraktivierungstemperatur erreicht wird. Die Vorwärmung kann entweder elektrisch mit Hilfe von Heizeinrichtungen oder durch den thermischen Wärmeimpuls einer Flamme im Gemischbildungsraum des Reformers bei einem Luftverhältnis bzw. Lambda größer 1 bzw. überstöchiometrisch erfolgen. Die Katalysatoraktivierungstemperatur liegt bevorzugt im Bereich von 250° bis 400°C, ganz bevorzugt bei ungefähr 350° C. Ist durch die oben beschriebene Vorheizung die Katalysatoraktivierungstemperatur erreicht, so wird ein dem Reformer zugeführtes Kraftstoff/Luft-Gemisch oder Kraftstoff/Wasser/Luft-Gemisch oder Kraftstoff/Wasser-Gemisch umgesetzt und es entsteht ein wasserstoffreiches Gas, das nachfolgend auch als Reformat bezeichnet wird. Zur Erzeugung des Reformates wird bevorzugt einem Kraftstoff/Luft-Gemisch ein niedriges Luftverhältnis von ungefähr 0,35 eingestellt. Das Kraftstoff/Luft-Gemisch wird wie oben beschrieben im Katalysator des Reformers in ein wasserstoffhaltiges Gas bei Temperaturen um 950° Celsius umgewandelt.

Bei den niedrigen Katalysator-Temperaturen beim Starten des Reformers enthält das Reformat neben Wasserstoff auch noch einen erheblichen Anteil an gasförmigem Wasser und nicht vollständig umgesetzten Kohlenwasserstoffen.

Daher wird sofort in einem zweiten Schritt gemäß der Erfindung das Reformat, d.h. das wasserstoffhaltige Gas überstöchiometrisch, d.h. mit einem Luftüberschuss in der Reformer-Reformatbrenneranordnung verbrannt. Hierdurch entstehen Verbrennungsgase, die dazu genutzt werden können, die Reformerleitung und alle anderen nachfolgenden Komponenten wie beispielsweise die Brennstoffzelle oder Gasreinigung zu erwärmen. Im Gegensatz zur DE 102 44 803 ist hierfür kein der Reformer-Reformatbrenneranordnung nachgeschalteter Wärmetauscher erforderlich, sondern die Verbrennungsgase werden direkt für die Erwärmung der anderen Komponenten genutzt. Damit zeichnet sich die vorliegende Erfindung durch eine einfachere konstruktive Lösung als die in der DE 102 44 803 angegebene aus. Die Erwärmung der nachfolgenden Komponenten, beispielsweise der Brennstoffzelle mittels eines gasförmigen Trägerstromes anstelle eines Wärmeübertragungsmediums wie im Stand der Technik ist vorliegend möglich, weil in der Startphase das Reformat verbrannt wird und so eine Kondensation von z.B. im Reformat in der Startphase enthaltenen Kohlenwasserstoffen z.B. in der Brennstoffzelle vermieden wird. Des Weiteren wird mit der erfindungsgemäßen Vorrichtung und Verfahrensführung die Rußbildung, d. h. die Abscheidung von Ruß an den kalten Wänden stark vermindert.

Nach Erreichen der Anti-Kondensationstemperatur der den Reformer verlassenenden Produkte z.B. in der Brennstoffzelle kann dann die Zufuhr von Luft in die Reformer-Reformatbrenneranordnung unterbrochen oder vermindert werden und in einem dritten Schritt das Reformat dann unverbrannt oder teilweise unverbrannt in die Brennstoffzelle bzw. die Brennstoffzelleneinheit geleitet werden.

Wie zuvor beschrieben umfasst in der Startphase das den Reformer verlassende Produktgemisch einen erheblichen Anteil von gasförmigem Wasser und nicht vollständigen umgesetzten Kohlenwasserstoffen. Die Anti-Kondensationstemperatur des den Reformer verlassenden Produktgemisches wird im Wesentlichen von den Kohlenwasserstoffen in der Brennstoffzelle bestimmt. Die Anti-Kondensationstemperatur liegt im Bereich 150°C bis 450°C. Die Anti-Kondensationstemperatur entspricht dann im wesentlichen maximal dem temperaturbezogenen Siedeende des Kraftstoffes. Das temperaturbezogene Siedeende des Kraftstoffes wird im Wesentlichen durch die Kraftstoffzusammensetzung bestimmt. Beispielsweise liegt das Siedeende für Kraftstoffe mit einem hohen Anteil an zyklischen Kohlenwasserstoffen höher als bei Kraftstoffen mit einem niedrigen Anteil zyklischer Kohlenwasserstoffe.

Im dritten Schritt durchströmt das wasserstoffhaltige Reformat, wie zuvor beschrieben, unverbrannt die Brennstoffzelle, da die Brennstoffzelle noch nicht die Betriebstemperatur erreicht hat, bei der durch die Reaktion von im Reformat enthaltenem Wasserstoff und Sauerstoff in der Brennstoffzelleneinheit elektrische Energie erzeugt wird. Das unverbrauchte wasserstoffhaltige Gas dient in dieser Phase als ein Wärmestrom bzw. Trägerstrom, der die Brennstoffzelle auf der Brenngasseite der Brennstoffzelle, d.h. der Anodenseite weitererwärmt. Nachdem das unverbrauchte Reformat die Anodenseite der Brennstoffzelle durchströmt hat, wird es einem Restgasbrenner zugeführt. Mit Hilfe des der Brennstoffzelle nachgeordneten Restgasbrenners und dem auf der Kathodenseite der Brennstoffzelle zugeführten Luftsauerstoff wird das Reformat gezündet und verbrannt. Das hierbei entstehende Verbrennungsgas wird dazu genutzt, mit Hilfe des Restgasbrenner-Wärmetauschers die Brennstoffzelle mit Luft als Trägerstrom für Wärme auch auf der Kathodenseite weiter zu erwärmen.

In einer alternativen Ausführungsform kann ein sogenannter Mixbetrieb gefahren werden, in welchem das Reformat in der Reformer-Reformatbrenneranordnung mit einem Luftverhältnis kleiner 1 umgesetzt wird und der Restgasbrenner den Rest des brennbaren Reformates verbrennt.

Wenn die Brennstoffzelle ihre Arbeitstemperatur oder Betriebstemperatur erreicht hat, die je nach Brennstoffzellentyp im Bereich zwischen 50° und 1000° Celsius liegt, so wird in einem vierten Verfahrensschritt der Wasserstoff und das Kohlenmonoxid des Reformates und der der Kathodenseite der Brennstoffzelle zugeführte Sauerstoff in der Brennstoffzelle ohne vorherige Verbrennung in elektrische Energie umgewandelt.

In einer besonders bevorzugten Ausführungsform der Erfindung kann vorgesehen sein, dass der beschriebenen Restgasbrenneranordnung mit Wärmeübertrager eine weitere Wärmetauscheranordnung nachgeordnet ist, zur Übertragung von in der Restgasbrenneranordnung entstehender Verbrennungswärme auf ein Wärmeübertragungsmedium. Bei einer Ausgestaltung des Brennstoffzellensystems mit einem der Restgasbrenneranordnung nachgeschalteten weiteren Wärmetauscher kann dann beispielsweise wie in der DE 102 44 833 B4 beschrieben, der weitere Wärmetauscher dazu benutzt werden, verschiedene Fahrzeugsystembereiche, beispielsweise ein Heizsystem zu erwärmen.

Das Brennstoffzellensystem kann eine Rezirkulationsleitung für Rückführung von Brennstoffzellenabgas, insbesondere Anodenabgas bei System mit Hochtemperaturbrennstoffzellen umfassen. Die Rezirkulationsleitung kann zusammen mit einer Reformer-Reformatbrennanordnung in einem Brennstoffzellensystem zur Anwendung kommen.

Des Weiteren können bei dem Brennstoffzellensystem Umschaltmittel vorgesehen sein, die den einer Restgasbrenneranordnung nachgeordneten weiteren Wärmetauscher zur Übertragung des im Wärmetauscher erzeugten Wärmestromes mit einem Abgassystem des Brennstoffzellensystems, einem Heizsystem verbindet.

In der Startphase, in der die Verbrennungsgase der Reformer-Reformatbrenneranordung dazu genutzt werden, die Komponenten des Brennstoffzellensystems zu erwärmen, werden bevorzugt mit einer Rezirkulationsleitung die Verbrennungsgase wieder an die Eingangsseite des Reformers geführt, um die Aufwärmung des Reformers zu unterstützen.

### Ausführungsbeispiele

Die vorliegende Erfindung wird nachfolgend mit Bezug auf die beigeschlossenen Zeichnungen anhand bevorzugter Ausgestaltungsformen detailliert beschrieben.

Es zeigt:
- Fig. 1: eine schematische Längsansicht einer Reformer-Reformatbrenneranordnung
- Fig. 2a: eine Querschnittsansicht des in Fig. 1 dargestellten Heizsystems im Bereich der Reformer-Reformatbrenneranordnung mit einer ersten Ausführungsform eines Lufteinspeisesystems
- Fig 2b: eine Querschnittsansicht des in Fig.1 dargestellten Heizsystems im Bereich des Reformer-Reformatbrenneranordnung mit einer zweiten Ausführungsform eines Lufteinspeisesystems
- Fig. 2c: eine Querschnittsansicht des in Fig. 1 dargestellten Heizsystems im Bereich des Reformer-Reformatbrenneranordnung mit einer dritten Ausführungsform eines Lufteinspeisesystems
- Fig. 2d: eine Querschnittsansicht des in Fig.1 dargestellten Heizsystems im Bereich des Reformer-Reformatbrenneranordnung mit einer vierten Ausführungsform eines Lufteinspeisesystems
- Fig. 3: eine blockbildartige Darstellung einer Ausgestaltung des Brennstoffzellensystems mit einer Hochtemeraturbrennstoffzelle, Reformer, einer Reformer-Reformatbrenneranordnung, einer Brennstoffzelle, und einer Restgasbrenneranordnung
- Fig. 4: eine blockbildartige Darstellung einer Ausgestaltung eines nicht zur Erfindung gehörenden Brennstoffzellensystems mit einer protonleitenden Niedertemperaturbrennstoffzelle, Reformer, einer Reformer-Reformatbrenneranordnung, einer Gasreinigung einer Brennstoffzelle, und einer Restgasbrenneranordnung

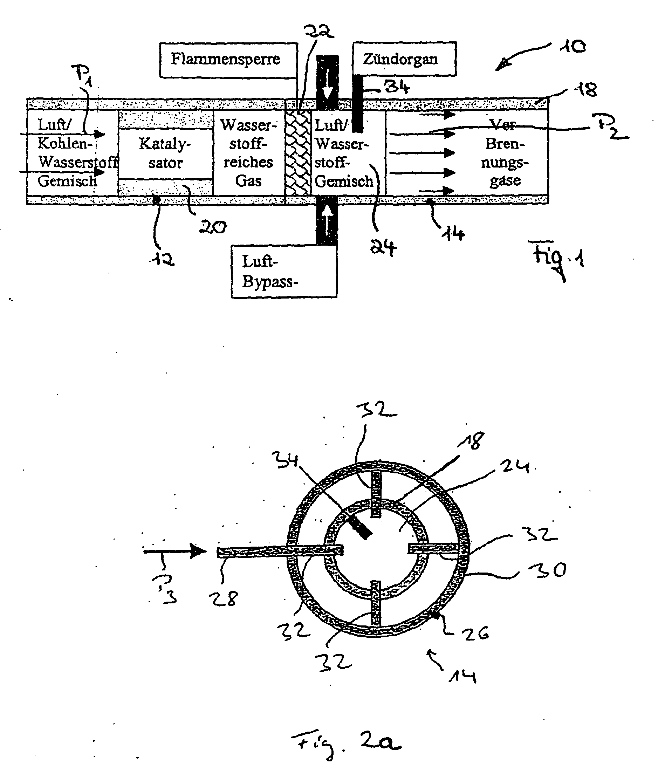

In Fig. 1 ist ein Reformer bzw. eine Reformeranordnung mit einer Reformer-Reformatbrenneranordnung allgemein mit 10 bezeichnet. Dieses System kann im Wesentlichen in zwei Bereiche gegliedert werden, nämlich eine im stromaufwärtigen Bereich liegende Reformeranordnung 12 sowie eine stromabwärts darauf folgende Reformatbrenneranordnung 14. Bei einer auf Grund des einfachen Aufbaus bevorzugten Ausgestaltungsform können all diese Systembereiche 12, 14 in einem einzigen rohrartigen Gehäusebereich 18 aufgenommen sein. Die Reformer-Reformatbrenneranordnung kann sich auch in einem verjüngten Querschnitt des rohrartigen Gehäusebereichs 18 befinden.

Die Reformeranordnung 12 umfasst einen symbolisch dargestellten Katalysator 20, in welchem ein durch Pfeil P₁ symbolisiertes Gemisch aus Luft und Kohlenwasserstoff, beispielsweise Dieselkraftstoff, ggf. unter der Beimengung von Wasser (oder eines Rezyklates) zersetzt wird, so dass die Reformeranordnung 12 ein gasartiges Gemisch verlässt, in welchem ein vergleichsweise hoher Anteil an Wasserstoff enthalten ist. Die Reformeranordnung 12 kann zur Erzeugung des zu zersetzenden Gemisches eine Verdampferanordnung aufweisen, welche vorerwärmt werden kann bzw. welcher auch bereits vorerwärmtes Ausgangsmaterial zur Erzeugung des Gemisches zugeführt werden kann. Sowohl der Katalysator 20 wie auch die Luft können beispielsweise elektrisch vorerwärmt werden. Hierzu ist dem Katalysator 20 eine Heizeinrichtung zugeordnet, die die zur Katalyse erforderliche Temperatur zur Verfügung stellt, welche beim Einsatz von Dieselkraftstoff als Kohlenwasserstoff im Bereich von 320° Celsius liegt. Alternativ kann die Vorerwärmung des Katalysators auch mit Hilfe eines thermischen Wärmeimpulses einer Flamme erfolgen. Die Flamme kann durch eine Selbstentzündung beispielsweise des in den Gemischbindungsraum 13 des Reformers eingeleiteten Luft/Kohlenwasserstoff-Gemisches zur Verfügung gestellt werden, wenn im Gemischbildungsraum 13 eine ausreichend hohe Temperatur vorliegt. Andernfalls kann das Luft/Kohlenwasserstoff-Gemisch mit Hilfe eines Zündorgans entzündet werden.

Das die Reformeranordnung 12 verlassende Gas tritt über eine Flammensperre 22 in die Brenneranordnung 14 bzw. eine Brennkammer 24 derselben ein. In diese Brennkammer 24 wird über ein in den Figuren 2a bis Figuren 2d dargestelltes Luftzuführleitungssystem 26 ferner Verbrennungsluft mit Hilfe einer Luftfördereinheit eingespeist. Eine Flammensperre 22 wird dann nicht benötigt, wenn die Strömungsgeschwindigkeit des wasserstoffreichen Gases größer ist als die Rückströmgeschwindigkeit bzw. Flammgeschwindigkeit des Luft/Wasserstoff-Gemisches.

In Figur 2a ist eine erste Ausführungsform eines Luftzuführleitungssystem 26 dargestellt. Bei dem Luftzuführungsleitungssystem 26 gemäß Figur 2a wird Luft entlang Pfeil P₃, von außen über den Leitungsbereich 28 einer Luftfördereinheit einem ringartigen Verteilungsleitungsbereich 30 zugeführt und entweder über eine Mehrzahl von in die Brennkammer 24 führenden Lufteinspeisungsabschnitten 32 in die Brennkammer 24 eingebracht oder über Öffnungen im rohrartigen Gehäusebereich 18 und einem Ringkanal 30 mit Leitungsbereich 28. Über spezielle Luftlenkungsvorrichtungen kann die Luft beim Einströmen in den rohrartigen Gehäusebereich 18 auch mit einem Drall versehen werden. Es wird auf diese Art und Weise eine weitgehend gleichmäßige Einspeisung der zusammen mit dem in die Brennkammer 24 geleiteten Wasserstoff zu verbrennenden Luft erlangt. Um das Gemisch aus Luft und Wasserstoff zu zünden und somit die Verbrennung auszulösen, kann ein Zündorgan 34 vorgesehen sein, welches eine Glühwendel, einen Glühstift oder dergleichen aufweisen kann. Eventuell ist es auch möglich an der heißen Flammensperre des Reformer-Reformatbrenners eine Selbstentzündung herbei zu führen.

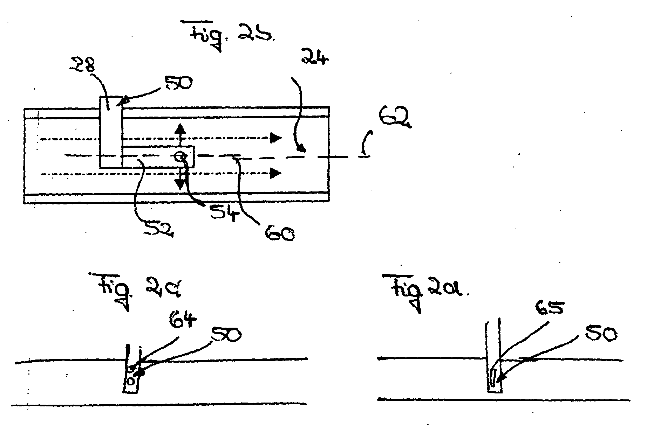

In Figur 2b ist eine alternative Ausführungsform des Luftzuführleitungssystems dargestellt. Bei der alternativen Ausführungsform der Erfindung erfolgt die Zuführung der Luft über ein in die Brennkammer 24 der Reformer-Reformatbrenneranordnung eingelassenes Luftrohr 50. Dies ist in Figur 2b dargestellt. Gleiche Bauteile wie in Figur 2a tragen dieselben Bezugsziffern. Gemäß Figur 2b wird über den Leitungsbereich 28 einer Luftfördereinheit Luft in ein Verteilerrohr 52, das innerhalb der Brennkammer 24 geführt wird, eingeleitet. Das Verteilerrohr 52 hat in die Umfangswand eingelassene Öffnungen 54 aus denen die Luft aus- und in die Brennkammer einströmen kann. Die Öffnung kann beispielsweise schlitz- oder lochförmig ausgeführt sein. Bevorzugt ist das Verteilerrohr symmetrisch um eine Achse 60 ausgebildet. Die Achse 60 liegt in einem bevorzugten Ausführungsbeispiel im Wesentlichen parallel zur Achse 62 der ebenfalls rohrförmigen Brennkammer 24. Anstelle der Einspeisung der Luft über das Verteilerrohr 52 können Öffnungen direkt in dem Luftrohr 50 eingelassen sein. Dies ist in den Figuren 2c und 2d gezeigt. So zeigt Figur 2c eine Ausführungsform mit lochförmigen Öffnungen 64 und Figur 2d eine Ausführungsform mit schlitzförmigen Öffnungen 65. Die Luftzuführung kann selbstverständlich auch auf eine Vielzahl von in die Reformatbrenneranordnung eingeleiteten Luftrohre verteilt sein.

Die bei der Verbrennung in der Reformer-Reformatbrenneranordnung 14 entstehenden Verbrennungsprodukte, welche allgemein in gasförmiger Form vorliegen, transportieren die bei der Verbrennung entstehende Wärme in Richtung der Brennstoffzelle. Durch die von den Verbrennungsgasen transportierte Wärme werden die Komponenten des Brennstoffzellensystems erwärmt. Durch die Pfeile P₂ ist angedeutet, dass die Verbrennungsprodukte bzw. Verbrennungsabgase die Reformer-Reformatbrenneranordnung verlassen und in einer Art und Weise weiter genutzt werden, wie nachfolgend noch beschrieben.

Durch das in den Figuren 1 und 2a - 2d dargestellte System wird es also möglich, das in einer Reformeranordnung 12 erzeugte Wasserstoffgas durch Verbrennung als Brennstoff zu nutzen, beispielsweise um in der Startphase des Brennstoffzellensystems die Brennstoffzelleneinheit selbst auf eine für den nachfolgenden Betrieb geeignete Temperatur zu erwärmen. Sobald in der Brennstoffzelle eine Temperatur erreicht ist, bei der keine Kondensation des die Reformeranordnung verlassenden Produktgemisches, d.h. des Reformates mehr auftritt, kann das Reformat unverbrannt der Brennstoffzelle zugeführt werden. Das Reformat erwärmt dann die Anodenseite der Brennstoffzelle weiter. Durch Verbrennung des durch die Brennstoffzelle hindurchgeleiteten Reformates auf der Anodenseite und Luft auf der Kathodenseite in einer Restgasbrenneranordnung kann die Kathodenseite der Brennstoffzelle weitererwärmt werden.

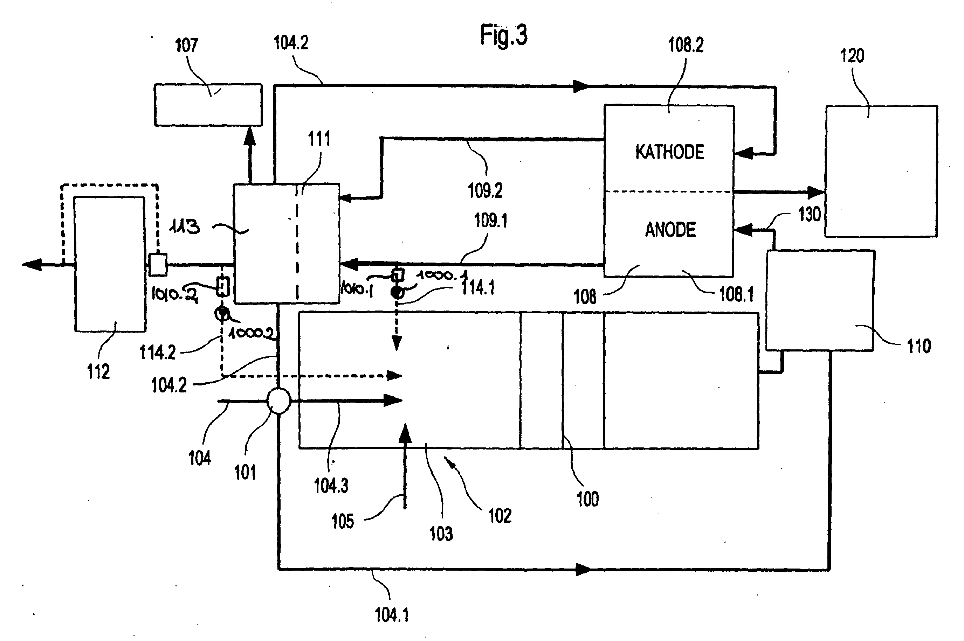

In Figur 3 ist das gesamte Brennstoffzellensystem mit einer Hochtemperaturbrennstoffzelle gezeigt. Der Reformer ist in Figur 3 mit der Bezugsziffer 102 bezeichnet.

In einer ersten Ausführungsform der Erfindung wird der Katalysator 100 oder die Luft mit einer nicht dargestellten elektrischen Heizeinrichtung erwärmt. Beispielsweise kann so der Katalysator 100 des Reformers 102 auf die Katalysatoraktivierungstemperatur erwärmt werden. Alternativ kann eine Erwärmung mit Hilfe einer Flamme erfolgen. Hierzu kann in der Gemischkammer 103 eingeleitetes Gemisch, beispielsweise ein Luft-/Kohlenwasserstoff-Gemisch entzündet werden. Die Luft wird über die Zuleitung 104 in den Gemischraum geführt; der Kohlenwasserstoff beispielsweise der Kraftstoff über die Zuleitung 105. Die Zuleitung 104 für die Luft in den Gemischraum 103 wird an der Knotenstelle 101 in eine Zuleitung 104.1 für Luft in den Reformer-Reformatbrenner 110 ,in eine Zuleitung 104.2 für Luft, die an die Kathodenseite 108.2 der Brennstoffzelle führt und eine Zuleitung 104.3, die in den Reformer verzweigt. Die Zuleitung 104.3 kann über einen nicht dargestellten integrierten Reformer-Wärmetauscher vorgewärmt werden. Zudem kann Sie durch Wärmeabfuhr den Katalysator kühlen. Anstelle einer gemeinsamen Luftzuleitung mit Knoten 101 können auch einzelne Luftzuleitungen und Luftfördereinheiten zu den einzelnen Komponenten vorgesehen sein.

Das entzündete Gemisch bildet dann eine Flamme aus, mit der beispielsweise der Katalysator 100 auf Katalysatoraktivierungstemperatur erwärmt wird. Sobald die Aktivierungsstemperatur des Katalysators erreicht ist, wird durch Zuführung von Luft und Kohlenwasserstoff, beispielsweise Kraftstoff in den Reformer 102 ein wasserstoffhaltiges Gas, das sogenannte Reformat erzeugt. In der Startphase enthält das Reformat einen erheblichen Anteil von gasförmigem Wasser und nicht vollständigen umgesetzten Kohlenwasserstoffen, die in den nachfolgenden Komponenten des Systems wie beispielsweise der Brennstoffzelle 108 auskondensieren können. Im vorliegenden Ausführungsbeispiel ist die Brennstoffzelle eine Hochtemperaturbrennstoffzelle, die mit einer Arbeitstemperatur von 650 bis 900°Celsius arbeitet und bei der bei Zufuhr von Luft und/oder Luftsauerstoff und/oder O₂ über Leitung 104.2 auf der Katodenseite und Reformat, d. h. Brennergas, beispielsweise H₂+CO über Leitung 130 auf der Anodenseite bei der Arbeitstemperatur der Brennstoffzelle von 650°Celsius bis 900°Celsius chemische Energie in elektrische Energie umgewandelt wird. Bei der Hochtemperaturbrennstoffzelle handelt es sich bevorzugt um eine solid oxid fuel cell (SOFC). Derartige Brennstoffzellen sind aus einer Vielzahl von Publikationen bekannt, beispielsweise der DE 19943523Al. Bei einer SOFC-Brennstoffzelle wird als Elektrolyt ein fester keramischer Elektrolyt, als Brennstoff H₂ und CO und als oxidatives Medium Luftsauerstoff verwandt. Die Anodenseite auf der die Zufuhr des Brennergases, d.h. vorliegend des Brennstoffes H₂ und CO vom Reformer her erfolgt, ist mit 108.1 gekennzeichnet, die Kathodenseite, auf der Luftsauerstoff zugeführt wird, mit 108.2.

Um ein Auskondensieren zu verhindern wird das den Reformer verlassende Reformat in der Startphase in der Reformer-Reformatbrenneranordnung 110, der dem Reformer 102 nachgeordnet ist, verbrannt. Hierbei entstehen warme Verbrennungsgase. Die warmen Verbrennungsgase werden von der Reformer-Reformatbrenneranordnung 110 in die Brennstoffzelle geleitet und dienen dazu, sämtliche Überleitungen zur Brennstoffzelle 108 sowie die Brennstoffzelle 108 selbst zu erwärmen.

Sobald die Anti-Kondensationstemperatur erreicht ist, was über einen Temperatursensor sensiert werden kann, kann in einer ersten Ausführungsform der Erfindung der Reformer-Reformatbrenner 110 vollständig abgeschaltet und das im Reformer erzeugte Reformat wird unverbrannt in die Brennstoffzelle 108 geleitet. In einer alternativen Ausführungsform ist es auch möglich nach Erreichen der Anti-Kondensationstemperatur, den Reformer-Reformatbrenner nicht vollständig abzuschalten, sondern mitlaufen zu lassen. In diesem Fall wird am Umschaltventil 101 der Luftstrom in einem bestimmten Verhältnis geteilt und ein erster Teil Luft an die Kathodenseite der Brennstoffzelle und ein zweiter Teil Luft in den Reformer-Reformatbrenner geführt. Es wird jetzt nur noch ein Teil des Brenngases aus dem Reformer des Reformer-Reformatbrenners verbrannt, der andere Teil gelangt an die Anodenseite der Brennstoffzelle und dient dort als Brenngas. Diese Verfahrensführung wird auch als Mischbetrieb bezeichnet. Hierbei ist darauf zu achten, dass die kritische Reoxidationstemperatur nicht überschritten wird.

Nach Erreichen der Anti-Kondensationstemperatur dienen nicht mehr alleine die Verbrennungsgase, sondern das Reformat teilweise oder vollständig als Trägerstrom für die Wärme. Die Wärme des Trägerstromes erwärmt sowohl die Leitungen wie auch die Brennstoffzelle 108 auf der Anodenseite 108.1. Über Leitung 109.1 wird das unverbrannte wasserstoffhaltige Gas zum Restgasbrenner 111 geführt. Im Restgasbrenner 111 mit Wärmeübertrager 113 wird das unverbrannte wasserstoffhaltige Gas zusammen mit Luftsauerstoff verbrannt. Die durch die Verbrennung erzeugte Wärme 107 wird dazu genutzt die Brennstoffzelle auf der Kathodenseite 108.2 mit Hilfe des Wärmeübertragers 113 des Restgasbrenners zu erwärmen. Die Kathodenseite 108.2 der Brennstoffzelle wird mit Luft über Leitung 104.2 versorgt. Die Abluft wird über eine zweite Leitung 109.2 zum Restgasbrenner 111 geführt. Dem Restgasbrenner 111 kann wie dargestellt ein weiterer Wärmeübertrager 112, beispielsweise ein Wärmetauscher, nachgeschaltet sein. Mit Hilfe des zweiten Wärmeübertragers 112 kann Wärme auf andere Teile des Fahrzeugsystems, beispielsweise die Heizung übertragen werden. Die Temperatur an der Anodenseite 109.1 der Brennstoffzelle kann mit einem Temperatursensor und die Temperatur an der Kathodenseite mit einem weiteren Temperatursensor detektiert werden. Die Temperatursignale der Sensoren können an eine Steuereinheit übertragen werden, die z.B. bei Erreichen der Anti-Kondensationstemperatur den Reformer-Reformatbrenner abschaltet.

Wenn die Brennstoffzelle die Betriebstemperatur erreicht hat, die bevorzugt zwischen 600° und 1000° Celsius, ganz besonders bevorzugt zwischen 650° und 900° Celsius liegt, wird das auf der Anodenseite 104.1 zugeführte wasserstoffhaltige Reformat durch eine chemische Reaktion in elektrische Energie umgewandelt und einem elektrischen Verbraucher 120 zugeführt. Der in diesem Zustand, d.h. im Betriebszustand der Brennsstoffzelle im Restgas noch vorhandener Wasserstoff kann entweder im Restgasbrenner 111 verbrannt oder alternativ über eine Rezirkulationsleitung dem Reformer 102 zugeführt werden. Die Rezirkulationsleitung 114.1 führt vor dem Restgasbrenner 111 unverbranntes, wasserhaltiges Restgas der Brennanordnung in den Gemischbildungsraum 103. Alternativ kann eine Rezirkulationsleitung 114.2 nach dem Restgasbrenner abzweigen und Restgas der Restgasbrenneranordnung mit Hilfe einer Gasförderungseinheit dem Gemischbildungsraum 103 zuführen. Durch die Rückführung bzw. Rezirkulation des gesamten oder auch von Teilmengen des in der Brennstoffzelle größtenteils umgewandelten Reformates kann die Temperatur im Reformer herabgesetzt werden und damit die Lebensdauer des Reformers erhöht werden. Dies ist darauf zurückzuführen, dass die Wasserbestandteile im rezirkulierten Reformatstrom mit dem Kohlenwasserstoff des Kraftstoffes reagieren und so die Wasserstoffausbeute und damit den Gesamtwirkungsgrad des Systems erhöhen. Da es sich bei der Reaktion der Wasserbestandteile um eine endotherme Reaktion handelt, wird die Temperatur im Katalysator des Reformers herabgesetzt und so seine Lebensdauer erhöht. Eine ausreichende Menge an Wasserbestandteilen im Anodenabgas ist bei ausreichender Umsetzung von Wasserstoff in der Brennstoffzelle vorhanden, d.h. in der Betriebsphase der Brennstoffzelle, wenn elektrischer Strom erzeugt wird. Bei einer Hochtemperaturbrennstoffzelle wird das Anodenabgas mittels einer Fördereinheit 1000.1 über die Rezirkulationsleitung 114.1 direkt vom Niederdruckbereich des Systems nach der Brennstoffzelle 108, beispielsweise in den Gemischbildungsraum 103 gefördert. Mögliche Fördereinheiten 1000.1 sind Gebläse, Verdichter, Kompressoren oder Wasserstrahlpumpen. In dem eingezeichneten Ausführungsbeispiel ist eine weitere Rezirkulationsleitung 114.2 vorgesehen, die Abgas des Restgasbrenners 111 vor den Reformer 102 leitet. Der Wassergehalt des Restgasbrennabgases ist in allgemeinen geringer als der des Anodenabgases, weswegen die Rezirkulationsleitung 114.1 gegenüber der Rezirkulationsleitung 114.2 bevorzugt ist. Als Fördereinheit 1000.2 kann wieder ein Gehäuse, Verdichter, Kompressor oder eine Wasserstrahlpumpe eingesetzt werden.

Neben den Vorteilen in der Betriebsphase hat eine Rückführung von Anodenabgas aber auch in der Startphase als Reformat des Brennstoffzellensystems Vorteile. So kann durch das rückgeführte, überwiegend stickstoffhaltige Gas eine Gemischbildungstemperatur und somit die Katalysatoreintrittstemperatur gesenkt werden. Da das Anodenabgas im Betrieb der Hochtemperaturbrennstoffzellen eine hohe Temperatur aufweist, kann das Brennstoffzellengabgas, das in der Regel eine Temperatur von bis zu 850°C aufweist, mit einer Kühleinrichtung 1010., 1010.2 in der Rezirkulationsleitung 114.1, 114.2 gekühlt werden, um die Fördereinheit vor Beschädigung zu schützen.

Die in dem Restgasbrenner 111 erzeugte Wärme wird, wie in der Prinzipskizze dargestellt, im Betriebszustand des Restgasbrenners 111 zur Vorwärmung von Edukten, beispielsweise der Kathodenluft der Brennstoffzelle 108 verwendet.

Der in der Brennstoffzelle 108 bei der Arbeitstemperatur erzeugte Strom wird, wie in der Prinzipskizze dargestellt, im Betriebszustand der Brennstoffzelle 102 mindestens einem elektrischen Verbraucher 120 zugeführt.

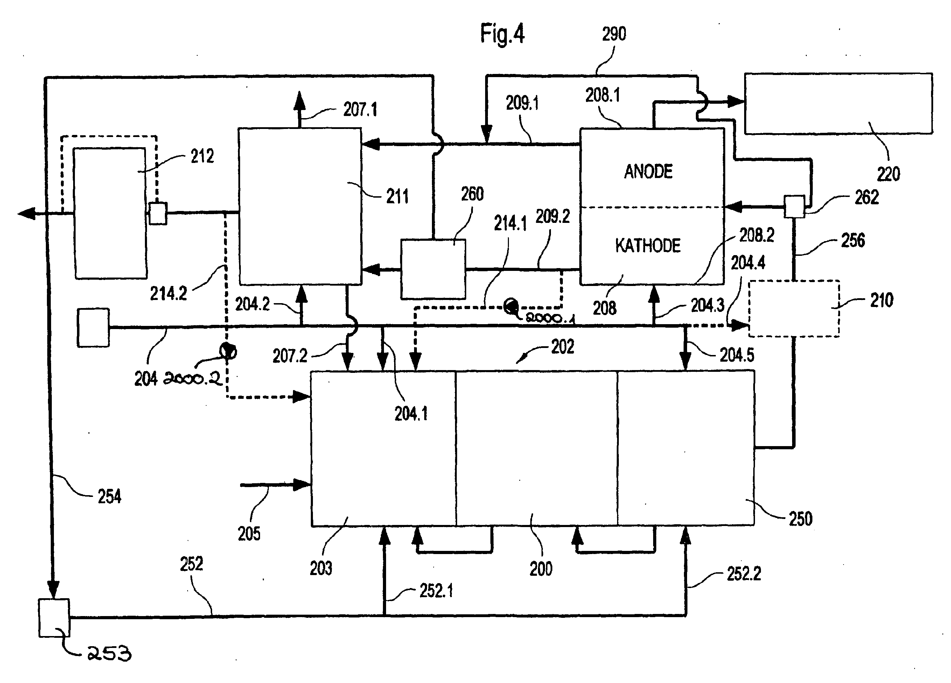

In Figur 4 ist eine nicht zur Erfindung gehörende Ausführungsform der Erfindung dargestellt, bei der anstelle einer Hochtemperaturbrennstoffzelle eine sogenannte PEM (Proton Exchange Membrane) Fuel Cell (PEM) also eine Membranbrennstoffzelle eingesetzt wird. Im Gegensatz zur Hochtemperaturbrennstoffzelle arbeitet eine PEM-Brennstoffzelle mit einer Betriebstemperatur im Bereich von 50°Celsius bis 150°Celsius, idealerweise sogar bereits bei Minustemperaturen. Eine PEM-Brennstoffzelle verwendet als Elektrolyt einen perfluorierten sulfonierten polymeren Elektrolyten, als Brennstoff entweder Wasserstoff oder reformierten Wasserstoff und als Oxidationsmedium Sauerstoff oder Luftsauerstoff. Der Unterschied der in Figur 3 gezeigten Hochtemperaturbrennstoffzelle und der in Figur 4 gezeigten PEM-Brennstoffzelle ist neben der Temperatur, die jeweils andere Transportrichtung von Wasserstoff- und Sauerstoff-Ionen. So wird H₂O, also Wasser bzw. wasserhaltiges Abgas bei der Hochtemperaturbrennstoffzelle auf der Anodenseite produziert und bei PEM bzw. PEFC-Brennstoffzellen auf der Kathodenseite. Gleiche Bauteile beim Schaltbild gemäß Figur 4 sind mit denselben Bezugsziffern erhöht um 100 belegt.

So bezeichnet die Bezugsziffer 204 die Luftzufuhrleitung des Systems. Die Luftzufuhrleitung führt Luft über die Leitung 204.1 in den Gemischbildungsraum 203 des Reformers 202 sowie über Leitung 204.2 in den Restgasbrenner 211, über Leitung 204.3 zur Kathodenseite 208.2 der Brennstoffzelle 208, über Leitung 204.5 zur Methanisierung in der Gasreinigungs- und Wärmetauscherstufe 250. Bei der in Figur 4 dargestellten Ausführungsform der Erfindung kann die Reformer-Reformatbrenneranordnung 210 zwischen Reformer 202 und der Gasreinigungsstufe 250 (nicht gezeigt) bzw. die Anodenseite der Brennstoffzelle 208.1 geschaltet sein. Falls eine Reformer-Reformatbrenneranordnung 210 vorgesehen ist, wird dieser über Leitung 204.4 Luft zugeführt.

Wegen der niedrigen Arbeitstemperatur der Brennstoffzelle von nur 80 bis 150°Celsius kann die Reformer-Reformatbrenneranordnung aber auch weggelassen werden. Da die Reformer-Reformatbrenneranordnung bei der Ausgestaltung gemäß Figur 4 nur optional ist, ist sie lediglich gestrichelt in das Schaubild eingezeichnet. Der Kraftstoff wird in den Gemischbildungsraum 203 des Reformers 202 über Leitung 205 zugeführt. Des Weiteren verfügt das System über ein Wasserleitungssystem 252. Mit Hilfe des Wasserleitungssystems 252 kann Wasser über Leitung 252.1 in den Gemischbildungsraum 203 und Leitung 252.2 in den Wärmetauscher (nicht gezeigt) der Gasreinigungsstufe 250 und dem Wärmetauscher (nicht gezeigt) des Reformers 202 oder in den Wärmetauscher (nicht gezeigt) des Restgasbrenners 211 geleitet werden, um die Betriebsbereiche der Katalysatoren aufgrund der exothermen Reaktion einzuhalten und das Wasser zu verdampfen und zu überhitzen.

Des Weiteren vorgesehen ist bei der Ausgestaltung gemäß Figur 4 eine Wasserrückgewinnungsstufe 260, die der Brennstoffzelle 208 nachgeordnet ist und dazu dient, aus dem wasserstoffhaltigen Restgas, das die Kathodenseite 208.2 der Brennstoffzelle 208 verlässt, Wasser zurückzugewinnen, das über Leitung 254 zur Wasserentnahmeleitung 252 rückgeführt wird. Das Wasser wird im Wassertank 253 gesammelt.

Die Bereitstellung wasserstoffhaltigen Gases als Brennstoff für die Brennstoffzelle geschieht, wie schon bei Ausführungsbeispiel 3 beschrieben, im Reformer 202. Der Reformer umfasst einen Gemischbildungsraum 203, in den beispielsweise ein Kohlenwasserstoff-Luft-Gemisch eingespeist wird und mit Hilfe eines Katalysators 200 zu einem wasserstoffhaltigen Reformat umgesetzt wird. Die Katalysatorbetriebstemperatur beträgt ungefähr 900 bis 1000°Celsius, insbesondere 950°Celsius. Die Erwärmung des Katalysators auf die Katalysatoraktivierungstemperatur kann mit Hilfe eine elektrischen Vorheizung oder einer Flamme, wie zuvor beschrieben, erfolgen. Dem Katalysator nachgeschaltet ist eine Gasreinigungsstufe 250, die im Wesentlichen das Brennergas von CO reinigt. Die Gasreinigungsstufe wird bei der Niedertemperaturbrennstoffzelle benötigt, da die Niedertemperaturbrenntoffzelle im Brennergas nur eine Verunreinigung von maximal 50 ppm toleriert. Bei Gehalten über 50 ppm CO schlägt sich das CO an der aktiven Schicht der Brennstoffzelle nieder und verhindert so eine Diffussion von H⁺ - Ionen. Zusätzlich kann eine Bypassleitung 290 vorgesehen sein, mit der CO-haltiges Brennergas an der Anodenseite 208.1 der Brennstoffzelle vorbeigeleitet wird und in die Restgasleitung 209.1 gelangt. Zur Umschaltung in die Bypassleitung ist ein Umschaltventil 262 vorgesehen. Eine derartige Anordnung ist vorteilhaft in der Startphase, in der die Temperatur für einen vollständigen Umsatz des CO in der Gasreinigungsstufe noch nicht erreicht ist. Vorzugsweise ist der optionale Reformat-Restgasbrenner 210 vor der Gasreinigungsstufe 250 angeordnet.

Wie beim vorgenannten Ausführungsbeispiel wird um ein Auskondensieren von im Reformat enthaltenen Rest-Kohlenwasserstoffen, die zu irreversiblen Rückständen in der Brennstoffzelle führen können, in einer besonders vorteilhaften Ausführungsform eine Reformer-Reformatbrenneranordnung 210 in einer ersten, nicht dargestellten Ausführungsform zwischen dem Reformer 202 und der Gasreinigungsstufe 250 bzw. in einer alternativen Ausführungsform zwischen die Gasreinigungsstufe 250 und der Anodenseite 208.1 der Brennstoffzelle geschaltet. Die Ausgestaltung mit einem Reformer-Reformatbrenner ist optional und keineswegs zwingend. Um eine direkte Beaufschlagung insbesondere beim Anfahren des Systems, bei dem der CO-Gehalt am höchsten ist, der Anodenseite der Brennstoffzelle mit Brenngas die zu einer Kontaminierung mit Kohlenmonoxid führen kann, zu vermeiden, ist ein Umschaltventil 262 vor der Brennstoffzelle und eine Bypassleitung 290 vorgesehen. Das Umschaltventil 262 schaltet das Gas in die Bypassleitung vorwiegend im Falle des Starts, um Brenngas mit einem zu hohen CO-Anteil in das Abgassystem des Brennstoffzellensystems zu leiten.

Ist die Betriebstemperatur der PEM-Brennstoffzelle 208 erreicht, die bevorzugt zwischen 50 und 150°Celsius, insbesondere zwischen 80 und 150°Celsius liegt, so reagiert das wasserstoffhaltige Brenngas, das über Leitung 256 der Anodenseite der Brennstoffzelle zugeführt wird, mit auf der Kathodenseite 208.2 zugeführtem Luftsauerstoff 204.3, so dass elektrische Energie erzeugt wird, die an mindestens einen elektrischen Verbraucher 220 abgegeben werden kann.

Das in der Brennstoffzelle anfallende wasserstoffhaltige Restgas sowie die Abluft werden über Leitungen 209.1 (wasserstoffhaltiges Restgas), 209.2 (Abluft) an den Restgasbrenner 211 geführt und können dort verbrannt werden. Die so erzeugte Wärme ist mit Pfeilen 207.1, 207.2 dargestellt. Diese Wärme kann abgegeben werden oder dem Reformer zugeführt werden, um diesen zu erwärmen. Dem Restgasbrenner 211 nachgeordnet ist ein Wärmetauscher 212, der die vom Restgasbrenner zur Verfügung gestellte Wärme dazu benutzen kann die Edukte Luft und/oder Wasser oder andere Fahrzeugbereiche zu erwärmen.

Wie schon beim Ausführungsbeispiel gemäß Figur 3 sind Rezirkulationsleitungen 214.1, 214.2 vorgesehen, wobei bei der Ausführungsform mit einer PEM-Brennstoffzelle in Figur 4 das wasserhaltige Kathodenabgas, anstatt des Anodenabgases zurückgeführt wird. Durch die Rückführung bzw. Rezirkulation des Gesamten oder von Teilmengen des in der Brennstoffzelle größtenteils umgewandelten Reformates kann die Temperatur im Reformer herabgesetzt werden und damit die Lebensdauer des Reformers erhöht werden. Dies ist darauf zurückzuführen, dass die Wasserbestandteile in rezirkulierten Reformatstrom mit dem Kohlenwasserstoff des Kraftstoffes reagieren und so die Wasserstoffausbeute und damit den Gesamtwirkungsgrad des Systems erhöhen. Da es sich bei der Reaktion der Wasserbestandteile um eine endotherme Reaktion handelt, wird die Temperatur im Katalysator des Reformers herabgesetzt und so seine Lebensdauer erhöht. Eine ausreichende Menge an Wasserbestandteilen im Kathodenabgas ist bei ausreichender Umsetzung von Wasserstoff in der Brennstoffzelle vorhanden, d.h. in der Betriebsphase der Brennstoffzelle, wenn elektrischer Strom erzeugt wird. Das Kathodengas wird mittels einer Fördereinheit 2001.1 über die Rezirkulationsleitung 214.1 direkt vom Niederdruckbereich des Systems nach der Brennstoffzelle 208, beispielsweise in den Gemischbildungsraum 203 gefördert. Mögliche Fördereinheiten 1000.1 sind Gebläse, Verdichter, Kompressoren oder Wasserstrahlpumpen. In dem eingezeichnetem Ausführungsbeispiel ist eine weitere Rezirkulationsleitung 214.2 vorgesehen, die Abgas des Restgasbrenners 211 vor dem Reformer 202 leitet. Der Wassergehalt des Restgasbrennabgases ist in allgemeinen geringer als der des Kathodenabgases, weswegen die Rezirkulationsleitung 214.1 gegenüber der Rezirkulationsleitung 214.2 bevorzugt ist. Als Fördereinheit 2000.2 kann wieder ein Gehäuse, Verdichter, Kompressor oder eine Wasserstrahlpumpe eingesetzt werden.

Neben den Vorteilen in der Betriebsphase hat eine Rückführung von Kathodenabgas aber auch in der Startphase des Brennstoffzellensystems Vorteile. So kann durch das rückgeführte, überwiegend stickstoffhaltige Gas eine Inertisierung im Gemischbildungstemperatur und somit die Katalysatoreintrittstemperatur gesenkt werden kann.

Gegenüber den Brennabgasen der Hochtemperaturbrennstoffzelle beträgt die Abgastemperatur der Kathodenabgase nur 80°C bis 160°C. Eine Kühlung ist daher nicht vorteilhaft, weil sie in diesem Fall zur Auskondensation von Wasser führt.

Die in Figur 4 dargestellte Ausführungsform unterscheidet sich von der in Figur 3 dargestellten Ausführungsform im Wesentlichen durch die Wahl der Brennstoffzelle.

Mit der Erfindung wird erstmals ein Brennstoffzellensystem angegeben, bei dem sowohl eine Reformer-Reformatbrenneranordnung wie eine Restgasbrenneranordnung vorgesehen ist und das Starten des Brennstoffzellensystems mit Hilfe von Reformer-Reformatbrenneranordung und Restgasbrenneranordnung erfolgt.

Durch die Verwendung einer Reformer-Reformatbrenneranordnung können die in der Startphase im Reformat enthaltenen Rest-Kohlenwasserstoffen verbrannt werden, um so irreversible Rückstände beispielsweise in der Brennstoffzelle zu vermeiden. Aufgrund dieser Verfahrensführung ist es möglich, das Brennstoffzellensystem direkt mit Gasen als Wärmestrom ohne Zwischenschaltung eines Wärmetauschers zu erwärmen.

Dadurch, dass die Reformer-Reformatbrenneranordnung abgeschaltet wird, sobald die Anti-Kondensationstemperatur erreicht ist und das unverbrauchte Reformat als Wärmträger zur Erwärmung der Brennstoffzelle genutzt werden kann, wird eine sehr effizientes und schnelles Starten der Brennstoffzellenanordnung erreicht. Eine Zwischenschaltung eines separaten Wärmetauschers ist nicht mehr erforderlich. Ein weitere Vorteil des Systems ist der sehr schnelle Start des Brennstoffzellensystems, die unter anderem darauf zurückzuführen ist, dass die Flamme in der Gemischbildung weniger Leistung hat als die Flamme im Reformer-Reformatbrenner.

Des Weiteren zeigt die Erfindung erstmals Brennstoffzellensysteme, bei denen wasserhaltiges Brennstoffzellenabgas über eine Rezirkulatinsleitung oder mehrere Rezirkulationsleitung zum Reformer, insbesondere in den Gemischbildungsraum rückgeführt wird.

Insbesondere wird bei PEM-Brennstoffzellen das Kathodengas rückgeführt, bei Hochtemperaturbrennstoffzellen das Anodenabgas.

## Patentansprüche

1. Brennstoffzellensystem für ein Fahrzeug umfassend
- wenigstens einen Reformer (12, 102) zur Erzeugung eines Reformates als Brenngas für die Brennstoffzelle (108) mit einem Gemischbildungsraum (103)
- wenigstens einer Brennstoffzelle (108) welcher zur Erzeugung von elektrischer Energie das Reformat von dem Reformer an einer Eingangsseite zuführbar ist, wobei
- eine Rezirkulationsleitung (114.1, 114.2) zwischen einer Ausgangsseite der Brennstoffzelle (108) und dem Gemischbildungsraum (103) vorgesehen ist,
und
die Brennstoffzelle eine Hochtemperaturbrennstoffzelle ist und die Rezirkulationsleitung (114.1) eine Anodenseite der Hochtemperaturbrennstoffzelle mit dem Gemischbildungsraum verbindet, **dadurch gekennzeichnet, dass**
das Brennstoffzellensystem eine Reform-Reformatbrenneranordnung (14, 110) umfasst, wobei die Reformer-Reformatbrenneranordnung (14, 110) zwischen dem Reformer (102) und der Anode der Hochtemperaturbrennstoffzelle (108) angeordnet ist, wobei wahlweise
- vor Erreichen einer Anti- Kondensationstemperatur von Restkohlenwasserstoff und Wasserdampf, die in der Reformer-Reformatbrennanordnung (110) erzeugten Verbrennungsgase oder
- nach Erreichen der Kondensationstemperatur
Reformat direkt an die Anode der Hochtemperaturbrennstoffzelle (108) geleitet wird.

2. Brennstoffzellensystem nach Anspruch 1, **dadurch gekennzeichnet, dass** in der Rezirkulationsleitung eine Kühleinrichtung (1010.1, 1010.2) vorgesehen ist.

3. Brennstoffzellensystem gemäß einem der Ansprüche 1 bis 2, **dadurch gekennzeichnet, dass**
in der Rezirkulationsleitung (114.1, 114.2, 214.1, 214.2) eine Fördereinrichtung (1000.1, 1000.2) vorgesehen ist.

4. Brennstoffzellensystem gemäß Anspruch 3, **dadurch gekennzeichnet, dass** die Fördereinrichtung eine oder mehrere der nachfolgenden Einrichtungen umfasst:
ein Gebläse, ein Verdichter, ein Kompressor oder eine Wasserstrahlpumpe

5. Brennstoffzellensystem nach einem der Ansprüche 1 bis 4, **dadurch gekennzeichnet, dass**
das Brennstoffzellensystem eine der Brennstoffzelle nachgeordnete Restgasbrenneranordnung (111) aufweist.

6. Brennstoffzellensystem nach einem der Ansprüche 1 bis 5, **dadurch gekennzeichnet, dass** wenigstens ein erster Wärmetauscher zur Übertragung von in der Restgasbrenneranordnung (111) entstehender Verbrennungswärme auf ein Wärmeübertragungsmedium vorgesehen ist.

7. Brennstoffzellensystem nach einem der Ansprüche 1 bis 6, **dadurch gekennzeichnet, dass** nach der Restgasbrenneranordnung (111) wenigstens ein weiterer Wärmetauscher (112) vorgesehen ist

8. Brennstoffzellensystem nach einem der Ansprüche 1 bis 7, **dadurch gekennzeichnet, dass** Umschaltmittel vorgesehen sind zum wahlweisen Verbinden des der Restgasbrenneranordnung (111) nachgeordneten weiteren Wärmetauschers (112) mit einem Heizsystem.

9. Brennstoffzellensystem gemäß einem der Ansprüche 1 bis 8, **dadurch gekennzeichnet, dass**
zwischen dem Reformer (12) und einer Brennkammer (24) der Reformer-Reformatbrenneranordnung (14) eine Flammsperre (22) angeordnet ist.

10. Brennstoffzellensystem nach einem der Ansprüche 1 bis 9, **dadurch gekennzeichnet, dass** die Reformer-Reformatbrenneranordnung (14) eine Brennkammer (24) umfasst.

11. Brennstoffzellensystem nach einem der Ansprüche 1 bis 10, **dadurch gekennzeichnet, dass** die Reformer-Reformatbrenneranordnung (14) ein Lufteinspeisesystem umfasst.

12. Brennstoffzellensystem nach einem der Ansprüche 1 bis 11, **dadurch gekennzeichnet, dass** die Reformer-Reformatbrenneranordnung (14) einen Flammenwächter umfasst.

13. Brennstoffzellensystem nach einem der Ansprüche 1 bis 12, **dadurch gekennzeichnet, dass** das System ein Zündorgan umfasst.

## Claims

1. A fuel cell system for a vehicle, comprising
- at least one reformer (12, 102) for generating a reformate as a fuel gas for the fuel cell (108) with a mixture formation space (103);
- at least one fuel cell (108), to which the reformate can be supplied from the reformer in an input side for generating electrical power, with
- a recirculation line (114.1, 114.2) being provided between an output side of the fuel cell (108) and the mixture formation space (103),
and the fuel cell is a high-temperature fuel cell, and the recirculation line (114.1) connects an anode side of the high-temperature fuel cell with the mixture formation space, **characterized in that**
the fuel cell system comprises a reform-reformate burner arrangement (14, 110), with the reformer-reformate burner arrangement (14, 110) being arranged between the reformer (102) and the anode of the high-temperature fuel cell (108), wherein optionally
- before reaching an anti-condensation temperature of residual hydrocarbon and water vapor, the combustion gases generated in the reformer-reformate burner arrangement (110) or
- after reaching the condensation temperature, reformate is guided directly to the anode of the high-temperature fuel cell (108).

2. A fuel cell system according to claim 1, **characterized in that** a cooling device (1010.1, 1010.2) is provided in the recirculation line.

3. A fuel cell system according to one of the claims 1 to 2, **characterized in that**
- a conveying device (1000.1, 1000.2) is provided in the recirculation line (114.1, 114.2, 214.1, 214.2).

4. A fuel cell system according to claim 3, **characterized in that**
- the conveying device comprises one or several of the following devices:
a fan, a blower, a compressor or a water-jet pump.

5. A fuel cell system according to one of the claims 1 to 4, **characterized in that** the fuel cell system comprises a residual gas burner arrangement (111) arranged downstream of the fuel cell.

6. A fuel cell system according to one of the claims 1 to 5, **characterized in that** at least one first heat exchanger is provided for transferring combustion heat originating in the residual gas burner arrangement (111) to a heat transfer medium.

7. A fuel cell system according to one of the claims 1 to 6, **characterized in that** at least one further heat exchanger (112) is provided after the residual gas burner arrangement (111).

8. A fuel cell system according to one of the claims 1 to 7, **characterized in that** changeover means are provided for the selective connection of the further heat exchanger (112) with a heating system, said heat exchanger being arranged downstream of the residual gas burner arrangement (111).

9. A fuel cell system according to one of the claims 1 to 8, **characterized in that** a flame retarder (22) is arranged between the reformer (12) and a combustion chamber (24) of the reformer-reformate burner arrangement (14).

10. A fuel cell system according to one of the claims 1 to 9, **characterized in that** the reformer-reformate burner arrangement (14) comprises a combustion chamber (24).

11. A fuel cell system according to one of the claims 1 to 10, **characterized in that** the reformer-reformate burner arrangement (14) comprises an air feeding system.

12. A fuel cell system according to one of the claims 1 to 11, **characterized in that** the reformer-reformate burner arrangement (14) comprises a flame guard.

13. A fuel cell system according to one of the claims 1 to 12 , **characterized in that** the system comprises an ignition element.

## Revendications

1. Système de pile à combustible pour un véhicule, comprenant
- au moins un reformeur (12, 102) pour produire un produit de reformage servant de gaz combustible pour la pile à combustible (108), avec un espace de formation du mélange (103),
- au moins une pile à combustible (108) à laquelle le produit de reformage peut être amené à partir du reformeur sur un côté d'entrée en vue de la génération d'énergie électrique,
- une conduite de recyclage (114.1, 114.2) étant prévue entre le côté de sortie de la pile à combustible (108) et l'espace de formation de mélange (103),
et
la pile à combustible étant une pile à combustible à haute température et la conduite de recyclage (114.1) reliant un côté d'anode de la pile à combustible à haute température à l'espace de formation du mélange,
**caractérisé en ce que** le système de pile à combustible comprend un dispositif de reformeur-brûleur (14, 110), lequel dispositif de reformeur-brûleur (14, 110) est disposé entre le reformeur (102) et l'anode de la pile à combustible à haute température (108), avec acheminement direct
- soit des gaz de combustion produits dans le dispositif de brûleur-reformeur (110), avant qu'une température d'anticondensation du carbone résiduel et de la vapeur d'eau soit atteinte,
- soit du produit de reformage, après que la température de condensation du produit de reformage a été atteinte,
vers l'anode de la pile à combustible à haute température (108).

2. Système de pile à combustible selon la revendication 1, **caractérisé en ce qu'**un dispositif de refroidissement (1010.1, 1010.2) est prévu dans la conduite de recyclage.

3. Système de pile à combustible selon l'une des revendications 1 à 2, **caractérisé en ce qu'**un dispositif d'acheminement (1000.1, 1000.2) est prévu dans la conduite de recyclage (114.1, 114.2, 214.1, 214.2).

4. Système de pile à combustible selon revendications 3, **caractérisé en ce que** le dispositif d'acheminement comprend un ou plusieurs des dispositifs suivants : une soufflante, un condenseur, un compresseur et une pompe à jet d'eau.

5. Système de pile à combustible selon l'une des revendications 1 à 4, **caractérisé en ce qu'**il comporte un dispositif de brûleur à gaz résiduels (111) monté en aval de la pile à combustible.

6. Système de pile à combustible selon l'une des revendications 1 à 5, **caractérisé en ce qu'**au moins un premier échangeur de chaleur est prévu pour transférer la chaleur de combustion produite dans le dispositif de brûleur à gaz résiduels (111) vers un fluide caloporteur.

7. Système de pile à combustible selon l'une des revendications 1 à 6, **caractérisé en ce qu'**au moins un autre échangeur de chaleur (112) est prévu après le dispositif de brûleur à gaz résiduels (111).

8. Système de pile à combustible selon l'une des revendications 1 à 7, **caractérisé en ce que** des moyens de commutation sont prévus pour relier sélectivement l'autre échangeur de chaleur (112) monté en aval du dispositif de brûleur à gaz résiduels (111) avec un système de chauffage.

9. Système de pile à combustible selon l'une des revendications 1 à 8, **caractérisé en ce qu'**un dispositif anti-retour de flamme (22) est disposé entre le reformeur (12) et une chambre de combustion (24) du dispositif de reformeur-brûleur (14).

10. Système de pile à combustible selon l'une des revendications 1 à 9, **caractérisé en ce que** le dispositif de reformeur-brûleur (14) comprend une chambre de combustion (24).

11. Système de pile à combustible selon l'une des revendications 1 à 10, **caractérisé en ce que** le dispositif de reformeur-brûleur (14) comprend un système d'alimentation en air.

12. Système de pile à combustible selon l'une des revendications 1 à 11, **caractérisé en ce que** le dispositif de reformeur-brûleur (14) comprend un détecteur de flammes.

13. Système de pile à combustible selon l'une des revendications 1 à 12, **caractérisé en ce que** le système comprend un organe d'allumage.
